# FASCICULE DE BREVET EUROPEEN

(11) **EP 0 596 798 B1**
(45) Date de publication et mention de la délivrance du brevet: **13.03.1996**
(21) Numéro de dépôt: 93402698.0
(22) Date de dépôt: 03.11.1993
(51) Int. Cl.: H02K 5/15, H02K 5/26

(54) **Alternateur pour véhicule automobile**
Wechselstromgenerator für Kraftfahrzeuge
Alternator for motor vehicles

(30) Priorité: 04.11.1992 FR 9213247
(43) Date de publication de la demande: 11.05.1994
(73) Titulaire: VALEO EQUIPEMENTS ELECTRIQUES MOTEUR, F-94000 Créteil (FR)
(72) Inventeur: Persyn, Jean-Marie, F-59470 Bollezeele (FR); Coppin, Jean-Noel, F-62630 Etaples (FR); Lebas, Jean, F-62170 La Calotterie (FR); Dormion, Benoît, F-62520 le Touquet (FR)
(74) Mandataire: Gamonal, Didier

(56) Documents cités:
- EP-A- 0 172 918
- WO-A-89/07361
- DE-B- 1 050 885
- GB-A- 1 257 167
- GB-A- 2 019 109

## Description

La présente invention concerne un alternateur pour véhicule automobile du type comprenant habituellement un stator en tôles assemblées dans lequel tourne un rotor dont l'axe tourillonne dans des paliers incorporés à des flasques.

Ces flasques, en général au nombre de deux, sont réalisés par moulage en alliage d'aluminium et contiennent l'ensemble des différents constituants de l'alternateur ; lesdits flasques étant rendus solidaires par des vis ou tirants.

Sur chacun des flasques est ménagée au moins une patte de montage équipée d'un passage circulaire au travers duquel sont introduits les moyens de fixation de l'alternateur sur le véhicule.

Pour permettre un montage de l'alternateur sur le véhicule de manière automatique, il est indispensable que le passage circulaire du premier flasque soit parfaitement aligné avec le passage circulaire du second flasque, la concentricité relative des deux passages devant être au plus égale à 0,8, c'est-à-dire que l'écart maximum d'alignement entre les axes des passages circulaires doit être au plus égal à 0,4mm.

Si des précautions particulières ne sont pas prises, l'assemblage des flasques par simple serrage des vis entraîne une concentricité relative comprise entre 1,2 et 1,6 nettement supérieure à la valeur requise pour un montage automatique.

Pour remédier à cet inconvénient, on introduit dans les passages circulaires des deux flasques, avant serrage des vis, une pige d'alignement cylindrique. Si cette solution permet d'obtenir la valeur voulue de concentricité relative, elle présente l'inconvénient de nécessiter des opérations complémentaires : mise en place de la pige, puis retrait de ladite pige après serrage des vis.

Ces opérations complémentaires sont difficilement automatisables et entraînent un surcoût pour l'alternateur, surcoût inadmissible, quand il s'agit d'une production en grande série comme c'est le cas dans le domaine automobile.

La présente invention résout ces problèmes et propose à cet effet un alternateur pour véhicule automobile comprenant deux flasques assemblés par des moyens de solidarisation, chaque flasque comportant au moins une patte de montage équipée d'un trou circulaire destiné au passage des moyens de fixation de l'alternateur sur le véhicule automobile, les flasques comprenant des moyens d'indexation angulaires adaptés à réaliser un positionnement angulaire prédéterminé des flasques l'un par rapport à l'autre, lesdits moyens d'indexation angulaires étant constitués d'au moins une goupille coopérant avec des perçages ménagés de matière dans les deux flasques, comme décrit dans DE-B-1 050 885, et est caractérisé en ce que la goupille comporte une tête cylindrique présentant une périphérie extérieure sur laquelle sont agencées des cannelures longitudinales.

Selon d'autres caractéristiques de l'invention :
- les cannelures longitudinales forment des saillies par rapport à la périphérie extérieure,
- la goupille présente une queue tronconique,
- la queue tronconique comporte deux méplats symétriques par rapport à l'axe de la goupille.

L'invention sera mieux comprise avec la description qui va suivre en regard des dessins annexés dans lesquels :
- la figure 1 est une vue latérale avec arrachement partiel d'un alternateur équipé de moyens d'indexation angulaires selon une première variante de l'invention ;
- la figure 2 est une vue en bout d'un alternateur selon l'invention ;
- la figure 3 est une vue partielle de la figure 1, à échelle agrandie, d'une seconde variante de l'invention ;
- la figure 3a est une vue en coupe suivant la ligne A-A de la figure 3 ;
- la figure 4 est une vue identique à la figure 3 pour une troisième variante de l'invention ;
- la figure 5 est une vue de dessus d'une goupille selon l'invention ;
- la figure 6 est une vue suivant la flèche F de la figure 5 ;
- les figures 7 et 7a sont des coupes suivant la ligne B-B de la figure 6 ;
- la figure 8 est une vue partielle de la figure 1, pour une quatrième variante de l'invention.

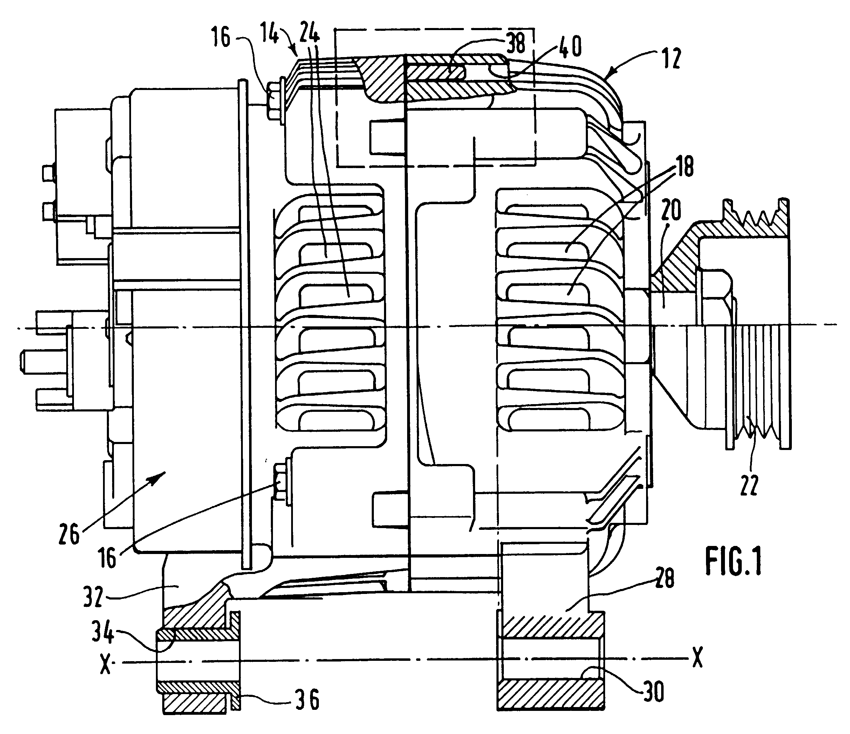

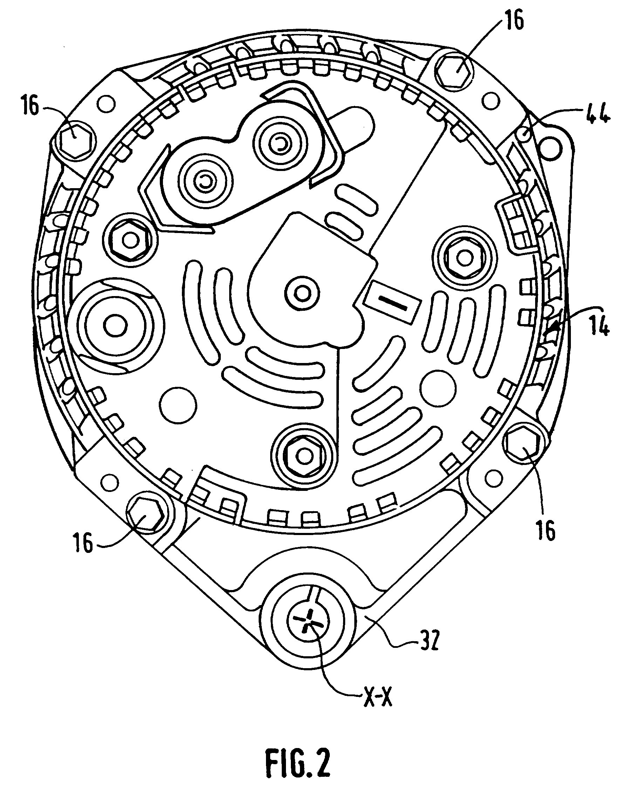

Les figures 1 et 2 illustrent un ensemble alternateur pour véhicule automobile comportant deux flasques 12,14 assemblés, dans l'exemple représenté par quatre vis 16.

Le flasque 12, dénommé habituellement le palier avant de l'alternateur, comporte notamment des ouies de ventilation 18.

A l'extrémité de l'arbre du rotor 20 (à droite sur la figure 1) est fixée une poulie 22 destinée à recevoir une courroie (non représentée) pour l'entraînement de l'alternateur par le moteur du véhicule.

Le flasque 14, dénommé habituellement le palier arrière de l'alternateur, présente également des ouies de ventilation 24 et comporte à son extrémité (à gauche sur la figure 1) un capot de protection 26 à l'intérieur duquel sont disposés les éléments redresseurs, le régulateur de tension et les balais.

Tous ces éléments ne faisant pas partie de la présente invention ne seront pas décrits ici plus en détail.

Le flasque 12 présente également une patte de montage 28 avec un passage ou trou circulaire 30 parallèle à l'axe général de l'alternateur.

Le flasque 14 présente également une patte de montage 32 avec un passage ou trou circulaire 34 parallèle lui aussi à l'axe général de l'alternateur et qui, dans l'exemple représenté, est équipé d'une douille 36.

C'est au travers de la douille 36 et du trou circulaire 30 que doivent passer les moyens de fixation (non représentés) de l'ensemble alternateur sur le véhicule automobile.

Comme il a été explicité plus haut, il est nécessaire que la douille 36 et le trou circulaire 30 soient parfaitement alignés suivant un axe X-X parallèle à l'axe général de l'alternateur.

Pour réaliser cet alignement, les flasques 12,14 comportent des moyens d'indexation angulaires adaptés à réaliser un positionnement angulaire prédéterminé des flasques 12,14 l'un par rapport à l'autre.

Sur la figure 1, ces moyens sont constitués d'un pion 38 ménagé de matière sur le flasque 14 et coopérant avec un logement 40 de forme complémentaire ménagé de matière sur le flasque 12.

Le pion 38 peut être de forme cylindrique ou conique, de même le logement 40 peut être de forme cylindrique ou conique.

Pour réduire le jeu, entre le pion 38 et le logement 40, et donc parfaire l'alignement des pattes de montage 28,32, on ménage soit sur le pion 38, soit sur le logement 40 des cannelures.

Dans cette configuration, les flasques 12 et 14 étant prééquipés des différents constituants de l'alternateur, il suffit d'emmancher le pion 38 dans le trou circulaire 40 jusqu'à ce que les flasques 12,14 soient jointifs, puis de procéder à leur assemblage définitif par serrage des vis 16.

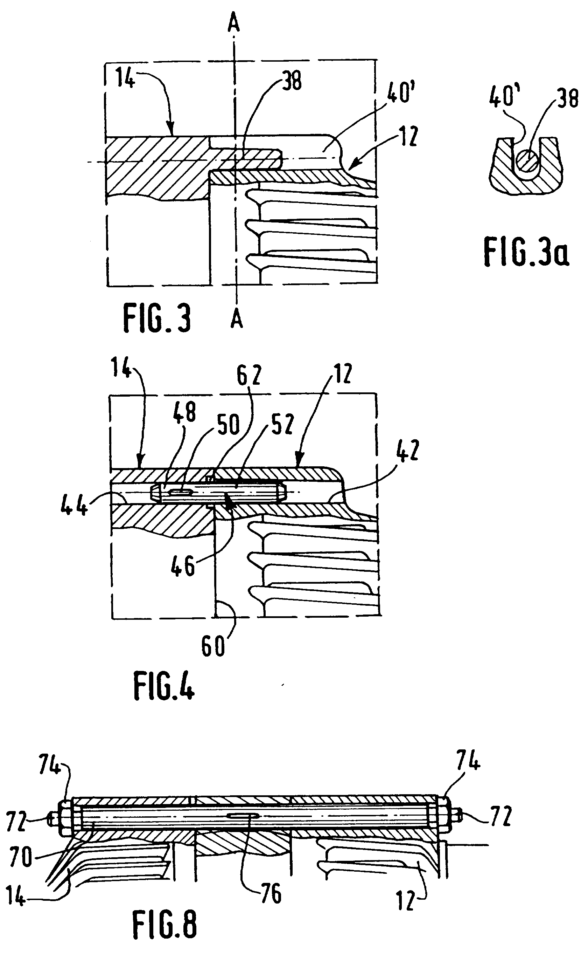

Sur les figures 3 et 3a, on a représenté une variante de la figure 1 dans laquelle le trou circulaire 40 a été remplacé par une lumière 40'.

Sur la figure 4, on a représenté une autre variante des moyens d'indexation angulaires des deux flasques 12,14, lesdits moyens étant constitués d'une goupille 46 coopérant avec des perçages 42,44 ménagés de matière dans les deux flasques, respectivement 12,14.

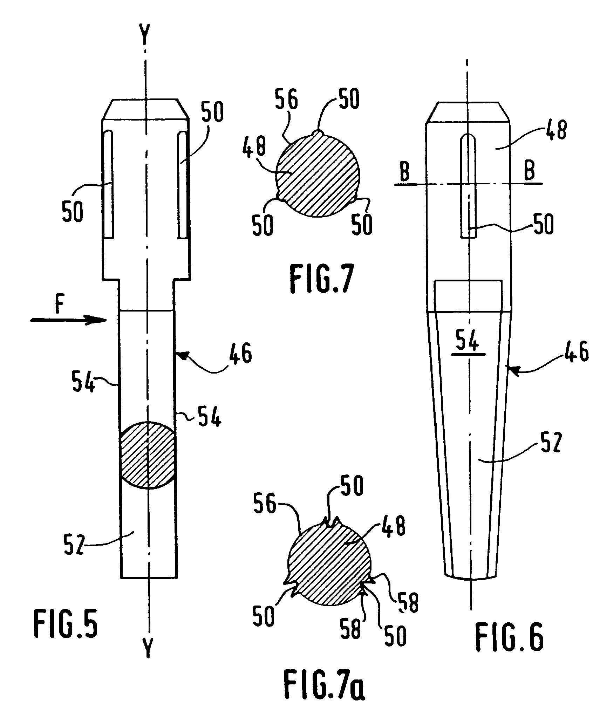

On se réfère maintenant aux figures 5 à 7, qui illustrent les détails de réalisation d'une telle goupille 46.

Cette goupille 46 comprend une tête cylindrique 48 sur laquelle sont ménagées des cannelures longitudinales 50, au nombre de trois dans l'exemple représenté et réparties angulairement de manière uniforme.

La tête cylindrique 48 se prolonge par une queue tronconique 52 sur laquelle on ménage deux méplats 54 symétriques par rapport à l'axe Y-Y de la goupille 46.

Sur la figure 7, les cannelures 50 sont ménagées en saillie par rapport à la périphérie extérieure 56 de la tête cylindrique 48.

Sur la figure 7a, les cannelures 50 sont ménagées en creux par rapport à la périphérie extérieure 56 et présentent des saillies 58.

La goupille 46 peut être introduite soit dans le flasque 12 où elle est maintenue par les conicités complémentaires de sa queue 52 et du trou 42, soit dans le flasque 14 où elle est maintenue par coopération des cannelures 50 avec le trou 44.

La goupille 46 étant ainsi maintenue dans l'un des flasques 12,14, on présente l'autre flasque avant vissage. La coopération de la goupille 46 avec les deux flasques 12,14 permet ainsi une indexation angulaire précise de ceux-ci.

La goupille 46 peut être réalisée soit en acier, soit en plastique.

Dans l'exemple représenté, figure 4, le trou 44 du flasque 14 comporte, à sa surface de contact 60 avec le flasque 12, un lamage 62 dont le but est de servir de logement aux copeaux formés par la coopération des cannelures 50 avec le trou 44.

Qu'il s'agisse du pion 38 ou de la goupille 48, les moyens d'indexation angulaires sont complètement indépendants des moyens de fixation des deux flasques 12,14 et donc des vis 16.

Sur la figure 8, on a représenté un moyen d'indexation angulaire 70 qui est en lieu et place d'un des moyens de fixation des deux flasques, c'est-à-dire en lieu et place d'une des vis 16.

Ce moyen d'indexation angulaire est constitué d'une tige cylindrique 70 dont les extrémités 72 sont filetées de manière à pouvoir recevoir des écrous 74. Dans son milieu, la tige cylindrique 70 comporte des cannelures 76 coopérant avec l'un des flasques 12,14 de manière à pouvoir la maintenir en place avant l'assemblage définitif.

La tige 70 peut ne comprendre qu'une extrémité filetée 72, l'autre extrémité constituant une tête de vis.

Le nombre de pattes de montage 28,32, le nombre de pion 38, de goupille 46, ou de tige cylindrique 70 peut être quelconque sans pour cela sortir du cadre de l'invention telle que définie dans les revendications suivantes.

## Revendications

1. Alternateur pour véhicule automobile comprenant deux flasques (12,14) assemblés par des moyens de solidarisation, chaque flasque (12,14) comportant au moins une patte de montage (28,32) équipée d'un trou circulaire (30,34) destiné au passage des moyens de fixation de l'alternateur sur le véhicule automobile, les flasques (12,14) comprenant des moyens d'indexation angulaires (46) adaptés à réaliser un positionnement angulaire prédéterminé des flasques (12,14) l'un par rapport à l'autre, lesdits moyens d'indexation angulaires étant constitués d'au moins une goupille (46) coopérant avec des perçages (42,44) ménagés de matière dans les deux flasques (12,14), caractérisé en ce que la goupille (46) comporte une tête cylindrique (48) présentant une périphérie extérieure (56) sur laquelle sont agencées des cannelures longitudinales (50).

2. Alternateur selon la revendication 1, caractérisé en ce que les cannelures longitudinales (50) forment des saillies (50,58) par rapport à la périphérie extérieure (56).

3. Alternateur selon l'une des revendications 1 à 2, caractérisé en ce que la goupille (46) présente une queue tronconique (52).

4. Alternateur selon la revendication 3, caractérisé en ce que la queue tronconique (52) comporte deux méplats (54) symétriques par rapport à l'axe (Y-Y) de la goupille (46).

## Patentansprüche

1. Wechselstromgenerator für Kraftfahrzeuge, der aus zwei Lagerschilden (12, 14) besteht, die durch Verbindungsmittel zusammengebaut werden, wobei jeder Lagerschild (12, 14) mindestens einen Montageansatz (28, 32) umfaßt, der mit einem kreisförmigen Loch (30, 34) für den Durchgang der Mittel zur Befestigung des Wechselstromgenerators am Kraftfahrzeug versehen ist, wobei die Lagerschilde (12, 14) Winkelpositioniermittel (46) enthalten, um eine bestimmte Winkeleinstellung der Lagerschilde (12, 14) im Verhältnis zueinander auszuführen, und wobei die besagten Winkelpositioniermittel aus mindestens einem Stift (46) bestehen, der mit Bohrungen (42, 44) zusammenwirkt, die einstückig in den beiden Lagerschilden (12, 14) vorgesehen sind, **dadurch gekennzeichnet,** daß der Stift (46) einen zylindrischen Kopf (48) umfaßt, der eine Außenperipherie (56) aufweist, an der Längsrillen (50) angebracht sind.

2. Wechselstromgenerator nach Anspruch 1, **dadurch gekennzeichnet**, daß die Längsrillen (50) Vorsprünge (50, 58) im Verhältnis zur Außenperipherie (56) bilden.

3. Wechselstromgenerator nach einem der Ansprüche 1 bis 2, **dadurch gekennzeichnet,** daß der Stift (46) ein kegelstumpfförmiges Endstück (52) aufweist.

4. Wechselstromgenerator nach Anspruch 3, **dadurch gekennzeichnet,** daß das kegelstumpfförmige Endstück (52) zwei im Verhältnis zur Achse (Y-Y) des Stifts (46) symmetrische Anflachungen (54) umfaßt.

## Claims

1. Alternator for a motor vehicle, comprising two covers (12, 14) assembled by fixing means, each cover (12, 14) having at least one mounting lug (28, 32) provided with a circular hole (30, 34) designed for the passage of the means of fixing the alternator on the motor vehicle, the covers (12, 14) comprising angular indexing means (46) adapted to achieve a predetermined angular positioning of the covers (12, 14) with respect to each other, the said angular indexing means consisting of at least one pin (46) cooperating with perforations (42, 44) formed in the material of the two covers (12, 14), characterised in that the pin (46) has a cylindrical head (48) with an external periphery (56) on which longitudinal flutes (50) are arranged.

2. Alternator according to Claim 1, characterised in that the longitudinal flutes (50) form projections (50, 58) with respect to the external periphery (56).

3. Alternator according to one of Claims 1 and 2, characterised in that the pin (46) has a tapered shank (52).

4. Alternator according to Claim 3, characterised in that the tapered shank (52) has two flats (54), symmetrical with respect to the axis (Y-Y) of the pin (46).
